# FASCICULE DE BREVET EUROPEEN

(11) **EP 0 406 054 B1**
(45) Date de publication et mention de la délivrance du brevet: **08.11.1995**
(21) Numéro de dépôt: 90401673.0
(22) Date de dépôt: 15.06.1990
(51) Int. Cl.: G11B 7/08

(54) **Dispositif d'accès et d'asservissement pour disque optique**
Vorrichtung zum Zugriff und zur Spurverfolgung für optische Platten
Access and tracking apparatus for optical disc

(30) Priorité: 30.06.1989 FR 8908800
(43) Date de publication de la demande: 02.01.1991
(73) Titulaire: ART TECH GIGADISC ATG, 31047 Toulouse (FR)
(72) Inventeur: Bec, Daniel, F-92045 Paris la Défense (FR); Le Merer, Jean-Pierre, F-92045 Paris la Défense (FR)
(74) Mandataire: Ruellan-Lemonnier, Brigitte

(56) Documents cités:
- EP-A- 0 287 235
- US-A- 4 773 062
- PATENT ABSTRACTS OF JAPAN vol. 7, no. 54 (P-180)(1199) 4 mars 1983,& JP-A-57 200948 (TOKYO SHIBAURA DENKI K.K.) 9 décembre 1982,
- PATENT ABSTRACTS OF JAPAN vol. 12, no. 90 (P-679) 24 mars 1988, JP-A-62223822 (Mitsubishi Electronic Cooperation ) 1 octobre 1987

## Description

La présente invention concerne un dispositif d'accès et d'asservissement à une piste portée par un support d'informations lisibles et/ou enregistrables optiquement par un rayonnement focalisé tel qu'un disque optique.

En effet, dans le cas de l'écriture et/ou de la lecture d'un disque optique, il est nécessaire à la fois d'accéder à une zone du disque puis de se maintenir dans cette zone avec une bonne précision aussi bien radialement que perpendiculairement à la surface du disque. Ainsi, ces dispositifs de l'art antérieur comportent en général trois dispositifs-moteur séparés.

Or, pour réaliser l'ensemble des trois fonctions ci-dessus, on a déjà décrit dans le brevet français N°82 03425 un dispositif d'accès et d'asservissement n'utilisant que deux dispositifs- moteur. Dans ce cas, la bobine d'accès est utilisée pour réaliser à la fois les fonctions d'accès et de suivi radial. Toutefois, pour obtenir un bon fonctionnement, il est prévu des moyens de liaison souples entre la bobine et les éléments de glissement de la bobine réalisant l'accès et le suivi radial dans l'entrefer d'un circuit magnétique fixe. En effet, l'utilisation de moyens en simple glissement ne permettait pas d'obtenir une précision de suivi de piste satisfaisante. D'autre part, dans le brevet français N°82 03425, pour éviter que l'opération de focalisation ne s'accompagne d'un effet de diaphragme sur l'optique, les bobines des deux dispositifs moteurs sont reliées l'une à l'autre par l'intermédiaire d'une fixation souple, chaque bobine étant solidaire d'un élément de la tête optique proprement dite. La structure du dispositif d'accès et d'asservissement ainsi réalisé accroît le balourd de l'élément mobile et donc la masse du contre-poids d'équilibrage, ce qui a pour principal inconvénient d'augmenter le poids de la tête.

On connaît aussi par le brevet Européen A 0287235 un dispositif d'accès et d'asservissement pour disque optique. Dans ce cas, le dispositif d'accès comporte un dispositif de glissement 43, une tête optique 30 et au moins un bras de suspension 44 connectant la tête au dispositif de glissement réalisant l'accès. De plus, une bobine spécifique réalise l'accès et une autre bobine permet le suivi radial.

En poursuivant des études sur les dispositifs d'accès et d'asservissement pour disque optique, la Demanderesse s'est aperçue qu'en utilisant une structure monobloc pour l'ensemble formé de la tête optique et des deux bobines prévues dans les dispositifs-moteur pour réaliser l'asservissement et l'accès, il est possible, en utilisant que deux bobines comme cela sera expliqué plus loin, d'éliminer les moyens souples de liaison tout en conservant une excellente précision du positionnement et ainsi d'alléger l'élément mobile, ce qui permet d'accélérer l'accès à la piste.

En conséquence, la présente invention a pour objet un dispositif d'accès et d'asservissement à une piste portée par un support d'informations lisibles et/ou enregistrables optiquement par un rayonnement focalisé, le support d'information comprenant une pluralité de pistes concentriques ou en spirales, ledit dispositif comportant une tête optique d'axe optique orthogonal au plan du support, la tête optique comportant un objectif de focalisation et un moyen de réflection pour réfléchir le faisceau lumineux venant vers le milieu, sensiblement le long de l'axe optique, l'objectif et le moyen de réflexion étant rigidement fixé l'un à l'autre, au moins un premier circuit magnétique fixe comportant au moins un noyau s'étendant dans une direction radiale par rapport auxdites pistes, un premier dispositif moteur permettant l'accès à une piste, le premier dispositif moteur étant constitué par au moins une première bobine montée de manière à se déplacer sur le noyau du circuit magnétique et un deuxième dispositif moteur permettant la focalisation du faisceau lumineux sur la piste, le deuxième dispositif moteur étant constitué d'une deuxième bobine coopérant avec un circuit magnétique, caractérisé en ce que la tête optique, la ou les bobine(s) du premier dispositif moteur et la bobine du second dispositif moteur sont fixées rigidement les unes avec les autres de manière à former un seul équipage mobile.

Ainsi, avec le dispositif ci-dessus, il n'est plus nécessaire d'utiliser des moyens de liaison souples intercalés entre l'équipage mobile, et les moyens de glissement sur le circuit magnétique d'accès et de suivi radial. En effet, le mouvement d'asservissement de focalisatlon crée une viscosité dynamique sur le suivi radial ou sur le mouvement d'accès et vice et versa. Cette viscosité dynamique s'explique de la façon suivante.

Lorsqu'un corps solide est en mouvement en s'appuyant sur un autre corps solide, comme le fait la bobine d'accès et d'asservissement radial sur le noyau de son circuit magnétique, une force de frottement, dont la grandeur dépend de la vitesse relative des deux solides, existe à leur surface de contact, que l'on suppose plane. Cette force de frottement solide limite, comme cela est bien connu, la précision de positionnement relatif de ces deux solides.

Si l'on ajoute maintenant au mouvement utile décrit ci-dessus, un autre mouvement indépendant de ce premier mouvement et lui aussi situé dans le plan de contact des deux solides, le caractère de frottement solide du mouvement utile disparait : une relation linéaire existe alors entre force de frottement et vitesse pour ce mouvement utile, comme dans le cas d'un frottement visqueux. Ce cas de figure s'obtient si l'on superpose sur le même solide les forces générées dans les bobines respectivement utilisées pour la focalisation d'une part et pour l'accès et l'asservissement radial d'autre part.

Ainsi, la possibilité d'éliminer les éléments de liaison souples simplifie la réalisation du dispositif d'accès et d'asservissement et permet de plus d'obtenir une meilleure stabilité de la boucle de focalisation.

D'autre part, l'équipage mobile est monobloc. Il peut donc être réalisé de façon très compacte et avoir en conséquence une masse très faible. Cela permet d'obtenir des accélérations très élevées et par suite des temps d'accès très courts.

Selon une caractéristique de l'invention, le dispositif comporte deux circuits magnétiques coopérant chacun avec une bobine des dispositifs-moteur.

D'autre part, selon un mode de réalisation préférentiel, la première bobine est constituée par une bobine cylindrique dont les conducteurs actifs sont dirigés selon l'axe optique de la tête optique et la deuxième bobine est constituée par une boblne, de préférence plate, dont les conducteurs actifs sont dirigés perpendiculairement à l'axe optique. De préférence, la deuxième bobine est fixée rigidement à la bobine cylindrique par l'intermédiaire d'au moins un élément support tel que des entretoises ou des éléments de suspension rigides.

Selon une autre caractéristique de la présente invention, le dispositif d'accès et d'asservissement comporte de plus au moins un dispositif anti-tangage. Ce dispositif anti-tangage entraîne une amélioration de la stabilité angulaire entre l'équipage mobile et le disque.

Selon un mode de réalisation préférentiel, le dispositif anti-tangage est constitué par une tige fixée à une extrémité de l'équipage mobile et comportant à son autre extrémité au moins un moyen coulissant dans une glissière parallèlement au noyau du premier circuit magnétique.

Selon une autre caractéristique supplémentaire de la présente invention, pour localiser le frottement de guidage et améliorer la stabilité angulaire dans les axes correspondant au roulis et au lacet, des petites pièces de matériau à faible coefficient de frottement, par exemple du "téflon", sont fixées à la bobine d'accès et d'asservissement radial et à la bobine de focalisation

D'autres caractéristiques et avantages de la présente invention apparaîtront à la lecture de la description d'un mode de réalisation préférentiel faite avec référence aux dessins ci-annexés dans lesquels :
- la figure 1 est une vue en coupe schématique d'un dispositif d'accès et d'asservissement pour disque optique incorporé dans le dispositif d'enregistrement-lecture du disque ;
- la figure 2 est une vue en coupe longitudinale d'un dispositif d'accès et d'asservissement conforme à la présente invention ;
- la figure 3 est une vue en coupe transversale du dispositif de figure 2 ;
- la figure 4 est une vue en plan de dessus du premier circuit magnétique,
- les figures 5A à 5D représentent différents modes de réalisation d'un dispositif anti-tangage, et
- la figure 6 est une vue en perspective simplifiée d'une variante du dispositif d'accès et d'asservissement suivant l'invention.

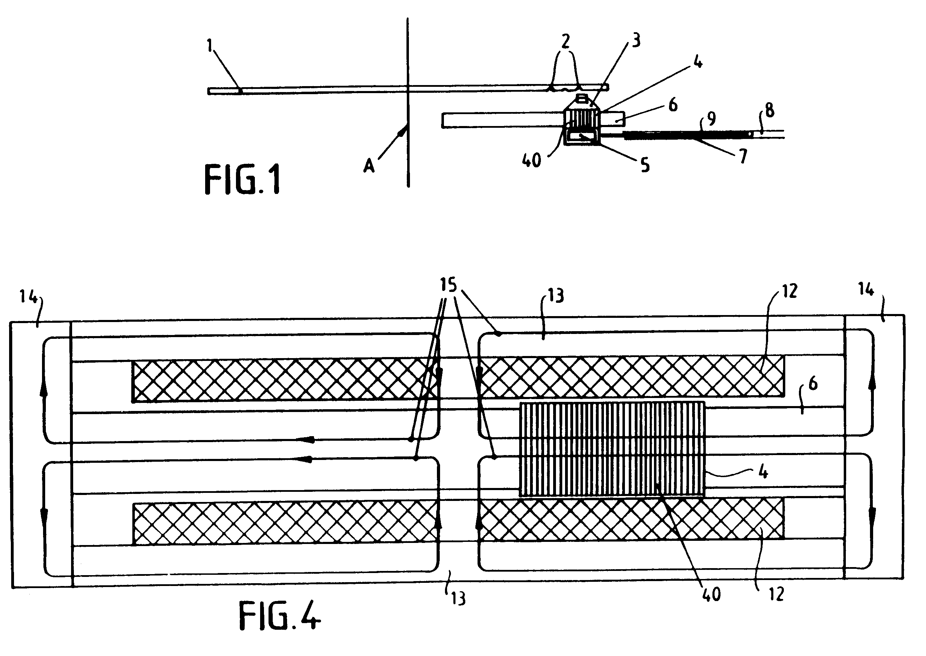

On a représenté schématiquement sur la figure 1 un dispositif d'accès et d'asservissement à une piste d'un disque optique 1 tournant autour d un axe de rotation A conforme à la présente invention.

De manière connue, les informations à lire ou à écrire sont enregistrées selon des cercles concentriques ou sur une spirale formant la piste. A titre d'exemple, cette piste est représentée schématiquement par des sillons ou tours 2 sur la figure 1.

Pour lire ou écrire une information et supposant que la focalisation est déjà acquise, on amène le dispositif d'accès et d'asservissement en face du sillon 2 puis l'on asservit en suivi radial le dispositif de manière à ce qu'il reste correctement positionné par rapport à la piste.

Comme représenté sur la figure 1, le dispositif d'accès et d'asservissement comporte au moins une tête optique 3 qui sera décrite plus en détail ci-après, une première bobine 4 d'accès et de suivi radial et une deuxième bobine 5 de focalisation. Cet ensemble forme un équipage mobile. Conformément à la présente invention, la tête 3 est connectée de manière fixe à la bobine d'accès et de suivi radial ainsi qu'à la bobine 5 de focalisation. Cet équipage mobile est amené à se déplacer en translation dans les entrefers de deux circuits magnétiques fixes. Pour simplifier le dessin de la figure 1, seul le noyau central 6 du premier circuit magnétique fixe a été représenté. Ce noyau 6 est sécant à tous les sillons ou tours 2 du disque 1 et s'étend sur une longueur égale à au moins la longueur utile d'enregistrement augmentée de la longueur de l'équipage mobile, hormis le dispositif anti-tangage. En effet, les informations sont enregistrées classiquement selon une couronne circulaire. Le premier circuit magnétique en association avec la bobine 4 forme le premier dispositif-moteur permettant l'accès et le suivi de piste. Le deuxième circuit magnétique en association avec la bobine 5 forme le deuxième dispositif-moteur permettant la focalisation. On a omis de représenter sur la figure 1 la source laser, les lentilles de focalisation ou les circuits électroniques associés avec les bobines 4 et 5 pour réaliser les asservissements, car ces circuits sont bien connus de l'homme de l'art.

D'autre part, comme représenté sur la figure 1, l'équipage mobile est muni d'un dispositif anti-tangage 7. Ce dispositif 7 est constitué, dans le mode de réalisation représenté, d'une glissière 8 dans laquelle peut coulisser une tige 9 fixée à une extrémité sur l'équipage mobile et portant à son autre extrémité des moyens spécifiques d'anti-tangage dont la forme correspond à la forme de la glissière 8 et qui seront décrits plus en détail ci-après.

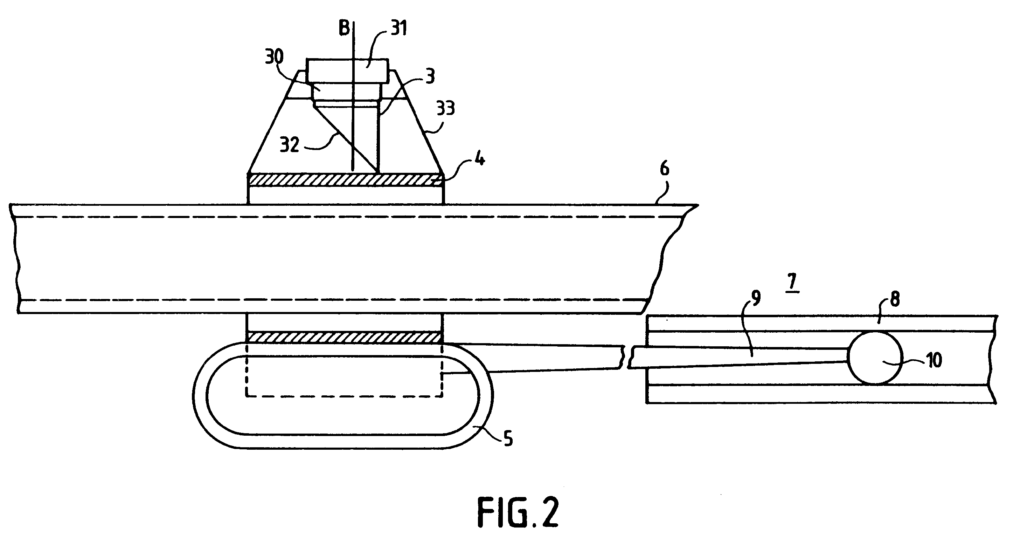

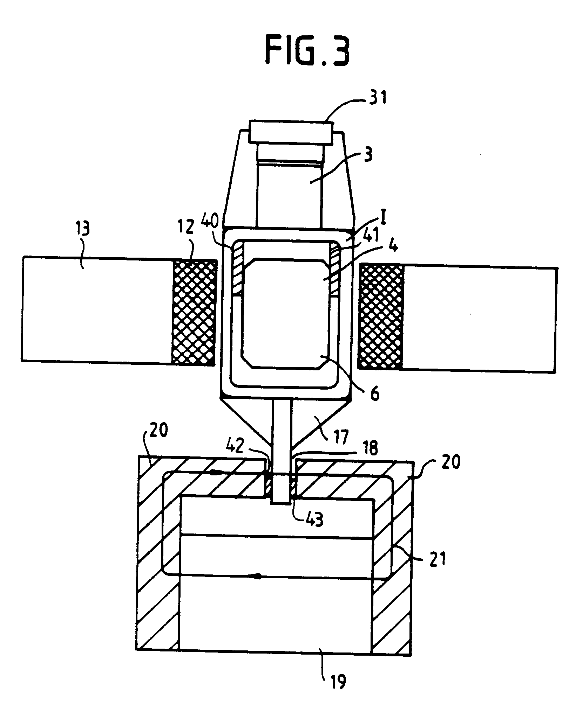

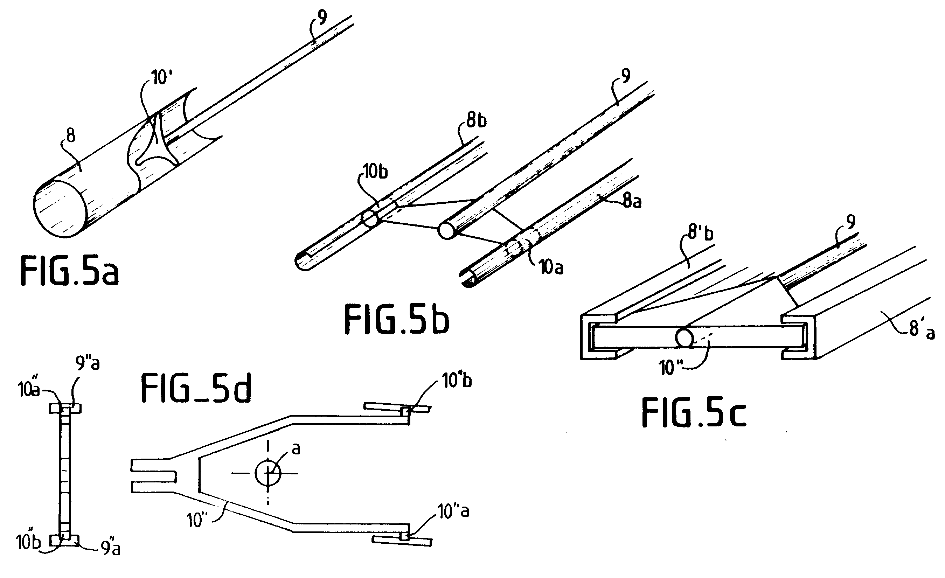

On décrira maintenant de manière plus détaillée avec référence aux figures 2 à 4, l'équipage mobile et les deux circuits magnétiques fixes permettant de réaliser les deux dispositifs-moteur nécessaires à l'accès et au suivi radial ainsi qu'à la focalisation. Comme représenté sur les figures 2 et 3, la tête optique 3 est constituée plus particulièrement par un élément cylindrique 30 portant à son extrémité supérieure un objectif 31 de focalisation et à son extrémité inférieure un miroir de renvoi 32 destiné à réfléchir le faisceau issu de la source laser vers le disque. L'axe B de la tête est placé orthogonalement au plan du disque. Cette tête 3 est fixée sur un élément support rigide 33 qui est solidarisé avec la bobine 4 du dispositif moteur permettant l'accès et le suivi radial de piste. Comme représenté sur les différentes figures, cette bobine 4 peut être constituée par un bâti cylindrique, d'axe parallèle à un rayon du disque, sur lequel est bobiné au moins un conducteur, dont les spires sont dirigées, dans leur partie active, selon l'axe optique de la tête, c'est-à-dire perpendiculairement à l'axe de la bobine cylindrique. De préférence, la bobine 4 est auto-porteuse, c'est-à-dire qu'elle ne possède pas de bâti et sa rigidité est assurée par le seul collage des spires de son conducteur. Comme représenté sur les figures 3 et 4, la bobine 4 entoure le noyau central 6 du premier circuit magnétique sur lequel elle est amenée à glisser.

D'autre part, comme représenté à la figure 3, deux pièces 40 et 41 sont fixées à la bobine 4 d'accès et de suivi radial. Ces pièces 40 et 41 assurent le guidage de cette bobine sur le noyau 6 de son circuit magnétique pour tout mouvement aussi bien dans la direction d'accès ou radiale que dans la direction de focalisatlon. Associées au dispositif anti-tangage 7, elles permettent de limiter le mouvement de lacet de l'équipage mobile. Comme représenté plus particulièrement à la figure 4, le premier circuit magnétique comporte, en plus du noyau central 6, des aimants droit et gauche 12 fixés sur des pièces polaires 13. Les pièces polaires 13 et le noyau central 6 sont solidarisés ensemble par des barres d'extrémité 14 qui permettent la fermeture du champ aux extrémités de ce dispositif moteur. Dans ce cas, les lignes de champ ont la forme représentée par les lignes avec des flèches 15. En fonction du sens du courant I appliqué aux conducteurs de la bobine 4, l'équipage mobile est amené à se déplacer radialement vers la gauche ou vers la droite sur la figure 1 de manière à venir se positionner en face d'un sillon 2 pour réaliser l'accès puis ensuite à suivre ce sillon en fonction des signaux d'asservissement envoyés.

D'autre part, en dessous de la bobine 4 est fixée rigidement par l'intermédiaire d'un système de fixation 17 tel que des équerres ou des éléments rigides, une bobine 5 utilisée pour réaliser la focalisation. Cette bobine 5 est constituée par une bobine plate de forme sensiblement elliptique sur le mode de réalisation de la figure 2. Cette bobine comporte des conducteurs dirigés perpendiculairement à l'axe optique de la tête optique 3. Comme représenté sur la figure 3, la partie inférieure de la bobine 5, à savoir les brins inférieurs des conducteurs 5, est positionnée dans l'entrefer d'un second circuit magnétique fixe dont l'entrefer 18 est parallèle aux entrefers du premier circuit magnétique. Ce second circuit magnétique comporte un aimant 19 et deux pièces polaires 20, l'ensemble présentant une forme de C, dans l'exemple décrit. Dans ce cas, les lignes de champ magnétique sont représentées par la référence 21. Ainsi, lorsque la bobine 5 est parcourue par un courant électrique I, il y a création d'une force F dirigée suivant la direction verticale. Ceci permet de réaliser facilement l'asservissement en focalisation. D'autre part, deux pièces 42 et 43 sont fixées à la bobine de focalisation 5. Elles assurent le guidage de cette bobine dans son circuit magnétique. Associées aux pièces 40 et 41, elles permettent de limiter le mouvement de roulis de l'équipage mobile.

D'autre part, comme représenté sur la figure 2, le dispositif de la présente invention comporte un dispositif anti-tangage 7 constitué par une tige 9 munie à son extrémité d'une bille 10 amenée à glisser dans une glissière 8 d'axe sensiblement parallèle à un rayon du disque.

Comme représenté sur les figures 5A à 5D, différents modes de réalisation peuvent être envisagés pour le dispositif anti-tangage.

Dans le mode de réalisation de la figure 5A, le dispositif anti-tangage est constitué par un élément à trois branches 10′ qui coulisse dans une glissière formée par un tube 8.

Sur la figure 5B, le dispositif anti-tangage est constitué par deux tétons cylindriques 10a, 10b reliés par des entretoises à la tige 9 et amenés à coulisser dans deux glissières 8a, 8b semi-cylindriques.

Dans le dispositif de la figure 5C, une entretoise 10˝ de section rectangulaire est fixée à l'extrémité de la tige 9 et est amenée à glisser dans deux glissières 8′a, 8′b de section sensiblement en U.

Sur la figure 5D, le dispositif anti-tangage est constitué de deux branches qui peuvent être dirigées en direction du centre du dispositif d'enregistrement-lecture et passer de chaque côté de l'axe moteur A dimInuant ainsi l'encombrement du dispositif.

Les deux glissières 8˝a et 8˝b Sont analogues à celles de la figure 5C. Les deux tétons 10˝a et 10˝b sont de forme parallèlépipédique.

Ce dispositif assure à la fois une protection anti-tangage et anti-roulis, comme le permettent aussi les dispositifs des figures 5B et 5C. Avec ces trois dispositifs, les éléments de guidage anti-roulis placés de part et d'autre de la bobine de focalisation peuvent être supprimés.

Il est à noter qu'avec le dispositif anti-tangage dirigé vers le centre du disque, les défauts d'inclinaison de la face du disque, situés dans un plan radial passant par l'axe du disque, peuvent être partiellement corrigés.

Il est évident pour l'homme de l'art que d'autres modes de réalisation peuvent être envisagés pour le dispositif anti-tangage.

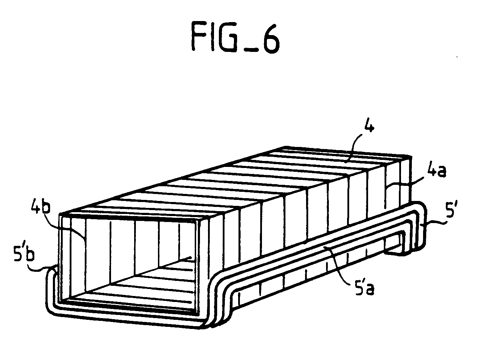

La figure 6 représente en perspective la position relative de la bobine 4 d'accès et d'asservissement radial et d'une bobine 5′ de focalisation. Seules les bobines sont schématisées pour simplifier la figure. Les côtés 4a et 4b sont les portions actives du conducteur ou des conducteurs de la bobine 4. Les parties 5′a et 5′b sont les portions actives du conducteur, ou des conducteurs de la bobine 5′. Ce mode de réalisation permet de n'avoir qu'un seul circuit magnétique 13, 12, 6. Dans ce cas, la bobine 5 peut être constituée par une bobine plate pliée en U de manière à venir s'emboîter sous la boblne 4 d'accès.

Le dispositif d'accès et d'asservissement conforme à la présente invention présente l'avantage d'être monobloc et de pouvoir être réalisé de manière très compacte ce qui permet de diminuer sensiblement son poids. Dans ce dispositif, il a été possible d'éliminer les liaisons souples, entre la bobine 4 et les éléments de glissement, en utilisant la viscosité dynamique produite par le mouvement simultané du premier dispositif moteur et du second dispositif moteur.

Ainsi, à titre d'exemple, en utilisant un objectif de diamètre 6 mm, d'ouverture numérique 0,47 à 0,55, un prisme à réflexion totale pour réaliser la fonction de miroir radiale et des bobinages en fil d'aluminium, on a pu obtenir un équipage mobile présentant une longueur (selon la direction du déplacement radial) de 15 mm, une hauteur (direction de l'axe de rotation du disque) de 26 mm, une largeur de 10 mm et une masse de 3 gr permettant des accélérations de 2000 mètres par seconde au carré.

## Revendications

1. Dispositif d'accès et d'asservissement à une piste portée par un support d'informations lisibles et/ou enregistrables optiquement par un rayonnement focalisé, le support d'information comprenant une pluralité de pistes concentriques ou en spirales, ledit dispositif comportant une tête optique (3) d'axe optique (B) orthogonal au plan du support (1), la tête optique comportant un objectif de focalisation et un moyen de réflection pour réfléchir le faisceau lumineux venant vers le milieu, sensiblement le long de l'axe optique, l'objectif et le moyen de réflexion étant rigidement fixé l'un à l'autre, au moins un premier circuit magnétique (12, 13) fixe comportant au moins un noyau (6) s'étendant dans une direction radiale par rapport auxdites pistes, un premier dispositif moteur permettant l'accès et le suivi radial de piste, le premier dispositif moteur étant constitué par au moins une première bobine (4) montée de manière à se déplacer sur le noyau du circuit magnétique et un deuxième dispositif moteur permettant la focalisation du faisceau lumineux sur la piste, le deuxième dispositif moteur étant constitué d'une deuxième bobine (5) coopérant avec un circuit magnétique, caractérisé en ce que la tête optique (3), la ou les bobine(s) (4) du premier dispositif moteur et la bobine (5) du second dispositif moteur sont fixées rigidement les unes avec les autres de manière à former un seul équipage mobile.

2. Dispositif selon la revendication 1, caractérisé en ce qu'il comporte un deuxième circuit magnétique (9, 10) fixe dont l'entrefer forme un plan sensiblement perpendiculaire au support et croisant toutes les pistes dans lequel se déplace la bobine (5) du deuxième dispositif moteur.

3. Dispositif suivant la revendication 1, caractérisé en ce qu'il comporte un unique circuit magnétique (12, 13) fixe constitué par au moins un noyau (6) sécant à l'ensemble des pistes dans les entrefers duquel se déplacent les bobines (4, 5′) des deux dispositifs moteurs.

4. Dispositif selon l'une quelconque des revendications 1 et 3, caractérisé en ce que la première bobine (4) est constituée par une bobine cylindrique dont les conducteurs actifs (4a, 4b) sont dirigés selon l'axe optique.

5. Dispositif selon l'une quelconque des revendications 1 à 3, caractérisé en ce que la deuxième bobine (5) est constituée par une bobine dont les conducteurs actifs sont dirigés perpendiculairement à l'axe optique.

6. Dispositif selon l'une quelconque des revendications 4 et 5, caractérisé en ce que la deuxième bobine est fixée rigidement à la bobine cylindrique par l'intermédiaire d'au moins un élément-support.

7. Dispositif selon l'une quelconque des revendications 4 et 5, caractérisé en ce que la deuxième bobine est conformée de manière à venir s'emboîter sur la première bobine.

8. Dispositif selon l'une quelconque des revendications 1 à 7, caractérisé en ce qu'il comporte de plus au moins un dispositif anti-tangage (7).

9. Dispositif selon la revendication 8, caractérisé en ce que le dispositif anti-tangage est constitué par au moins une tige (9) fixée à une extrémité sur l'équipage mobile et comportant à son autre extrémité au moins un moyen coulissant (10) dans au moins une glissière (8) parallèlement au noyau du premier circuit magnétique.

10. Dispositif selon l'une quelconque des revendications 1 à 8, caractérisé en ce qu'il comporte de plus des moyens (40, 41, 42, 43) anti-roulis et anti-lacet.

11. Dispositif selon la revendication 10, caractérisé en ce que les moyens anti-roulis et anti-lacet sont constitués par des pièces en matériau à faible coefficient de frottement fixées sur les bobines.

## Patentansprüche

1. Vorrichtung zum Zugriff und zur Verfolgung einer Spur, die von einem Träger von Informationen getragen wird, die optisch mittels einer fokussierten Strahlung gelesen und/oder geschrieben werden können, wobei der Informationsträger eine Vielzahl von konzentrischen oder spiralförmigen Spuren umfaßt, wobei die besagte Vorrichtung folgendes umfaßt: einen optischen Kopf (3) mit einer zur Ebene des Trägers (1) senkrechten optischen Achse (B), wobei der optische Kopf ein Fokussierungsobjektiv und ein Reflexionsmittel zum Reflektieren des in Richtung der Mitte einfallenden Lichtbündels im wesentlichen entlang der optischen Achse umfaßt, wobei das Objektiv und das Reflexionsmittel starr aneinander befestigt sind, wenigstens einen ersten festen Magnetkreis (12, 13), der wenigstens einen Kern (6) aufweist, welcher in einer bezüglich der besagten Spuren radialen Richtung angeordnet ist, eine erste Motorvorrichtung, die den Zugriff auf eine Spur und ihre radiale Verfolgung gestattet, wobei die erste Motorvorrichtung aus wenigstens einer ersten Spule (4) besteht, die auf bewegliche Weise am Kern des Magnetkreises befestigt ist, und eine zweite Motorvorrichtung, welche die Fokussierung des Lichtbündels auf die Spur gestattet, wobei die zweite Motorvorrichtung aus einer zweiten Spule (5) besteht, die mit einem Magnetkreis zusammenwirkt, dadurch gekennzeichnet, daß der optische Kopf (3), die Spule(n) (4) der ersten Motorvorrichtung und die Spule (5) der zweiten Motorvorrichtung starr miteinander verbunden sind, so daß sie eine einzige bewegliche Baugruppe bilden.

2. Vorrichtung nach Anspruch 1, dadurch gekennzeichnet, daß sie einen zweiten festen Magnetkreis (9, 10) umfaßt, dessen Spalt eine zum Träger im wesentlichen senkrechte und alle Spuren schneidende Ebene bildet, in welcher sich die Spule (5) der zweiten Motorvorrichtung bewegt.

3. Vorrichtung nach Anspruch 1, dadurch gekennzeichnet, daß sie einen einzigen festen Magnetkreis (12, 13) umfaßt, der aus wenigstens einem die Gesamtheit der Spuren überschneidenden Kern (6) besteht, in dessen Spalten sich die Spulen (4, 5′) der beiden Motorvorrichtungen bewegen.

4. Vorrichtung nach einem der Ansprüche 1 bis 3, dadurch gekennzeichnet, daß die erste Spule (4) eine Zylinderspule ist, deren aktive Leiter (4a, 4b) in Richtung der optischen Achse ausgerichtet sind.

5. Vorrichtung nach einem der Ansprüche 1 bis 3, dadurch gekennzeichnet, daß die zweite Spule (5) eine Spule ist, deren aktive Leiter senkrecht zur optischen Achse ausgerichtet sind.

6. Vorrichtung nach einem der Ansprüche 4 und 5, dadurch gekennzeichnet, daß die zweite Spule über mindestens ein Halterungselement starr mit der Zylinderspule verbunden ist.

7. Vorrichtung nach einem der Ansprüche 4 und 5, dadurch gekennzeichnet, daß die zweite Spule so gestaltet ist, daß sie sich in die erste Spule einfügt.

8. Vorrichtung nach einem der Ansprüche 1 bis 7, dadurch gekennzeichnet, daß sie außerdem wenigstens eine Anti-Nickbewegungsvorrichtung (7) umfaßt.

9. Vorrichtung nach Anspruch 8, dadurch gekennzeichnet, daß die Anti-Nickbewegungsvorrichtung aus wenigstens einem Stab (9) besteht, der an einem Ende an der beweglichen Baugruppe befestigt ist und an seinem anderen Ende wenigstens ein in wenigstens einer Gleitführung (8) parallel zum Kern des ersten Magnetkreises gleitendes Mittel (10) umfaßt.

10. Vorrichtung nach einem der Ansprüche 1 bis 8, dadurch gekennzeichnet, daß sie außerdem Anti-Rollbewegungs- und Anti-Gierbewegungsmittel (40, 41, 42, 43) umfaßt.

11. Vorrichtung nach Anspruch 10, dadurch gekennzeichnet, daß die Anti-Rollbewegungs- und Anti-Gierbewegungsmittel aus Teilen aus einem Material mit niedrigem Reibungskoeffizient bestehen, die an den Spulen befestigt sind.

## Claims

1. Device for access and for slaving to a track carried by a medium for information which can be read and/or recorded optically by focused radiation, the information medium comprising a plurality of concentric or spiral tracks, the said device including an optical head (3) with optical axis (B) orthogonal to the plane of the medium (1), the optical head including a focusing lens and a reflection means for reflecting the light beam coming towards the medium, substantially along the optical axis, the lens and the reflection means being rigidly fixed to one another, at least one first fixed magnetic circuit (12, 13) including at least one core (6) extending in a radial direction with respect to the said tracks, a first motor device allowing track access and radial tracking, the first motor device consisting of at least one first coil (4) mounted so as to move on the core of the magnetic circuit and a second motor device allowing focusing of the light beam onto the track, the second motor device consisting of a second coil (5) interacting with a magnetic circuit, characterized in that the optical head (3), the coil or coils (4) of the first motor device and the coil (5) of the second motor device are fixed rigidly to one another so as to form a single moving assembly.

2. Device according to Claim 1, characterized in that it includes a second fixed magnetic circuit (9, 10) the gap of which forms a plane substantially perpendicular to the medium and crossing all the tracks in which the coil (5) of the second motor device moves.

3. Device according to Claim 1, characterized in that it includes a single fixed magnetic circuit (12, 13) consisting of at least one core (6) secant to all the tracks in the gaps of which the coils (4, 5′) of the two motor devices move.

4. Device according to either of Claims 1 and 3, characterized in that the first coil (4) consists of a cylindrical coil the active conductors (4a, 4b) of which are directed along the optical axis.

5. Device according to any one of Claims 1 to 3, characterized in that the second coil (5) consists of a coil the active conductors of which are directed perpendicularly to the optical axis.

6. Device according to either of Claims 4 and 5, characterized in that the second coil is fixed rigidly to the cylindrical coil by means of at least one support element.

7. Device according to either of Claims 4 and 5, characterized in that the second coil is shaped so as to fit inside the first coil.

8. Device according to any one of Claims 1 to 7, characterized in that it further includes at least one anti-pitch device (7).

9. Device according to Claim 8, characterized in that the anti-pitch device consists of at least one rod (9) fixed at one end to the moving assembly and including, at its other end, at least one means (10) sliding in at least one slideway (8) parallel to the core of the first magnetic circuit.

10. Device according to any one of Claims 1 to 8, characterized in that it further includes anti-roll and anti-yaw means (40, 41, 42, 43).

11. Device according to Claim 10, characterized in that the anti-roll and anti-yaw means consist of pieces made of a material with a low coefficient of friction which are fixed to the coils.
